# EUROPEAN PATENT APPLICATION

(11) **EP 2 166 812 A2**
(43) Date of publication of application: **24.03.2010**
(21) Application number: 09011933.0
(22) Date of filing: 18.09.2009
(51) Int. Cl.: H04W 74/08

(54) **Method for improving uplink signaling transmission for a wireless communications system and related communication device**

(30) Priority: 22.09.2008 US 99181 P; 07.09.2009 US 554923
(71) Applicant: HTC Corporation, Taoyuan City Taoyuan County (TW)
(72) Inventor: Wu, Chih-Hsiang, Taoyuan City, Taoyuan County (TW)
(74) Representative: Görz, Ingo

(57) **Abstract**

A method of improving uplink signaling transmission for a user equipment of a wireless communication system (10) includes performing a random access procedure (602), and applying resources of a physical uplink control channel and an uplink symbol used for channel quality determination when a message of the random access procedure received from a network of the wireless communication system (10) is performed successfully (604).

## Description

The present invention relates to a method and apparatus for improving uplink signaling transmission in a wireless communications system according to the precharacterizing clauses of claims 1 and 2.

A long-term evolution (LTE) system, initiated by the third generation partnership project (3GPP), is now being regarded as a new radio interface and radio network architecture that provides a high data rate, low latency, packet optimization, and improved system capacity and coverage. A physical layer of the LTE system is based on Orthogonal Frequency Division Multiple Access (OFDM) with a Cyclic Prefix (CP) in the downlink and a Single Carrier Frequency Division Multiple Access (SC-FDMA) with CP in the uplink. In LTE architecture, an evolved universal terrestrial radio access network (E-UTRAN) includes a plurality of evolved Node-Bs (eNBs) being a radio interface communicating with a plurality of mobile stations, also referred as user equipments (UEs), for control and user plane data.

In the frequency domain channel-dependent scheduling, a reference symbol (RS) is supported on the downlink for channel quality indicator (CQI) measurement in order to assign optimum transmission bandwidth for following uplink shared data channel. Besides, two types of reference symbols (RS) are supported on the uplink. A demodulation reference symbol (DMRS) is associated with transmission of uplink data and/or control signaling. A sounding reference symbol (SRS) is an uplink symbol unrelated with uplink data transmission, used mainly for channel quality determination if frequency domain channel-dependent scheduling is used. Frequency domain channel-dependent scheduling is beneficial to improving the user and cell throughput performances in the LTE uplink using single-carrier (SC)-FDMA radio access.

When the UE attempts to connect to the Internet or communicate with other UEs, the UE firstly needs to be synchronized with the eNB that serves the UE on uplink timing. The purpose of being synchronized on uplink with the eNB is to prevent signals transmitted by the UE from colliding with other signals sent by other UEs under the coverage of the eNB.

A PUCCH (Physical Uplink Control Channel) is a dedicated-type uplink channel mapped to a control channel resource in the uplink. Depending on presence or absence of uplink timing synchronization, the uplink physical control signalling can differ. In the case of uplink timing synchronization being present, the uplink physical control signalling consists of CQI (Channel Quality Indicator), ACK/NAK (Acknowledgement/Negative Acknowledgement), and SR (Scheduling Request).

The CQI informs the scheduler (e.g. eNBs) about the current channel conditions of the UE. HARQ (Hybrid Automatic Repeat Request) feedback in response to downlink data transmission consists of a single ACK/NAK bit per HARQ process.

The SR is used for requesting UL-SCH (Uplink Share Channel) resources and corresponds to a buffer sate report (BSR).

PUCCH resources forACK/NACK reporting, SR and CQI reporting are assigned and can be revoked through RRC (radio resource control) signalling. PUCCH resources for ACK/NACK reporting, SR and CQI reporting are lost when the UE is no longer synchronized.

A time alignment timer of the UE is utilized for indicating whether the UE is synchronized with the eNB on uplink timing. When the time alignment timer is running, uplink timing synchronization is still established. When the time alignment timer expires, then this indicates that the UE is not synchronized with the eNB on uplink timing.

When the time alignment timer expires, the UE releases all PUCCH resources and any assigned SRS resources. That is, the UE loses uplink synchronization.

However, the abovementioned specification does not specify how and when the UE applies PUCCH resources and any assigned SRS resources after the UE gets uplink synchronization back. This decreases uplink (UL) transmission efficiency of the UE.

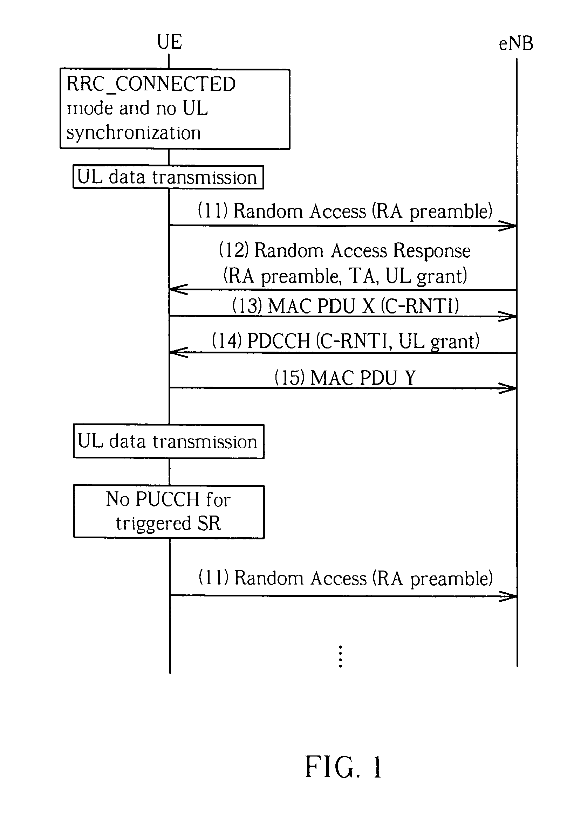

Two scenarios are described as below, corresponding to UL data transmission and DL (Downlink) data arrival respectively. Please refer to Fig. 1, which is a sequence diagram of a UE and an eNB corresponding to UL data transmission according to the prior art. The UE is in an RRC_CONNECTED mode and does not have UL synchronization with the eNB. That is, the UE does not apply PUCCH resources for transmission. The RRC_CONNECTED mode indicates that the UE has a radio resource control (RRC) connection with the eNB. In this situation, the UE uses a contention-based random access (RA) procedure for UL synchronization when attempting to transmit UL data.

In Step (11), the UE transmits an RA preamble to initiate the contention-based RA procedure. In Step (12), in response to the RA preamble, the eNB transmits an RA response including the RA preamble and information of the time alignment (TA), a UL grant, a temporary C-RNTI (Cell Radio Network Temporary Identifier), etc. The UL grant indicates the amount of UL data allowing to be transmitted for the UE in a certain UL opportunity. The C-RNTI provides a unique UE identification at the cell level identifying the RRC connection. In Step (13), according to the assigned UL grant, the UE transmit a MAC (Medium Access Control) PDU (Protocol Data Unit 1) X including the C-RNTI. This transmitted MAC PDU is for contention resolution of the UE. In Step (14), after the MAC PDU X is transmitted, the eNB sends another UL grant and the C-RNTI via PDCCH (Physical Downlink Control Channel). The signaling on PDCCH here indicates that the UE performs the RA procedure successfully and thereby establishes the UL synchronization. In Step (15), with the UL synchronization based on the received time alignment information, the UE transmits the UL data via in a MAC PDU Y. After Step (15), at another UL data transmission, the UE needs to send a regular BSR triggering SR. However, the UE has no configured PUCCH for SR at the moment and thereby re-initiates the RA procedure using Step (11).

As can be seen from Fig. 1, the UE can only transmit UL data via RA procedure. Using the RA procedure for SR takes more time than using PUCCH for SR because PUCCH for SR is a dedicated resource for a UE. Thus, this reduces efficiency of UL data transmission.

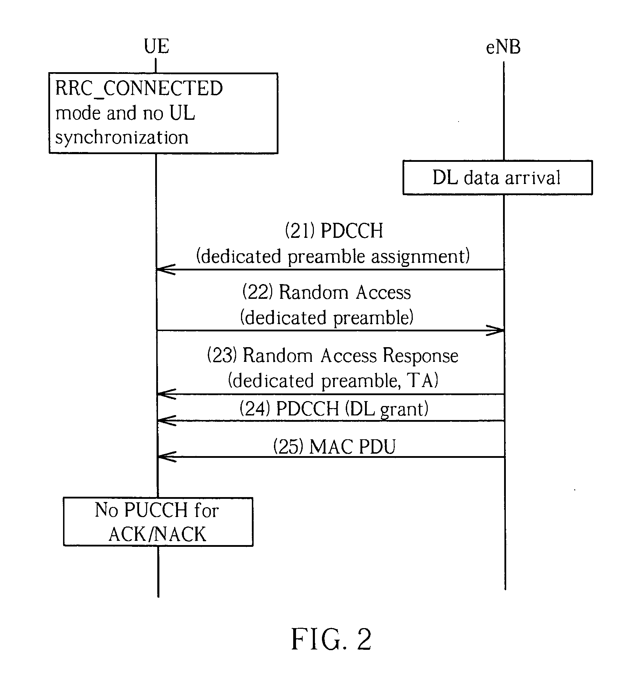

Please refer to Fig. 2, which is a sequence diagram of a UE and an eNB corresponding to DL data arrival according to the prior art. The UE is in the RRC_CONNECTED mode and does not have UL synchronization with the eNB. That is, the UE does not apply PUCCH resources for transmission. In this situation, the eNB assigns a dedicated preamble to request the UE to perform a non-contention based RA procedure for UL synchronization.

In step (21), the eNB assigns a dedicated preamble via PDCCH due to DL data arrival. In Step (22), the UE sends the assigned dedicated preamble to initiate the non-contention based RA procedure. In Step (23), the eNB responds the UE with a random access response including the dedicated preamble and time alignment (TA) information. With the time alignment information, the UE establishes the UL synchronization. After the successful transmission of the RA response, the eNB assigns a DL grant to the UE in Step (24) and subsequently send a MAC PDU including the DL data in Step (25). In this situation, the UE needs to report an ACK or NACK related to the MAC PDU. However, only PUCCH is used for ACK/NACK transmission and no PUCCH resources are applied for the UE at the moment. This causes the UE to fail in ACK/NACK reporting, seriously impacting DL data reception.

In addition, the assigned SRS resources cannot be used after the UE has uplink synchronization in the abovementioned scenarios. This impacts UL transmission efficiency because the eNB cannot utilize the SRS which should be transmitted by the UE for the frequency dependent scheduling.

This in mind, the present invention aims at providing a method and apparatus for improving uplink signaling, so as to ensure that uplink ability is available at the UE when uplink transmission is needed.

This is achieved by a method and apparatus for improving uplink signaling transmission in a wireless communications system according to claims 1 and 2. The dependent claims pertain to corresponding further developments and improvements.

As will be seen more clearly from the detailed description following below, the claimed method for improving uplink signaling transmission for a user equipment comprises performing a random access procedure, and then applying resources of a physical uplink control channel and an uplink symbol used for channel quality determination when a message of the random access procedure received from a network of the wireless communication system is performed successfully.

### Brief Description of the Drawings

- Fig. 1: is a sequence diagram of a UE and an eNB corresponding to UL data transmission according to the prior art.
- Fig. 2: is a sequence diagram of a UE and an eNB corresponding to DL data arrival according to the prior art.
- FIG. 3: is a schematic diagram of a wireless communication system.
- Fig. 4: is a schematic diagram of a communication device according to embodiments of the present invention.
- Fig. 5: is a schematic diagram of the program code according to Fig. 4.
- Fig. 6: is a flowchart of a process according to an embodiment of the present invention.
- Fig. 7: is a sequence diagram of a UE and an eNB corresponding to UL data transmission according to Fig. 6.
- Fig. 8: is a flowchart of a process according to an embodiment of the present invention.
- Fig. 9: is a sequence diagram of a UE and an eNB corresponding to DL data arrival according to Fig. 8.

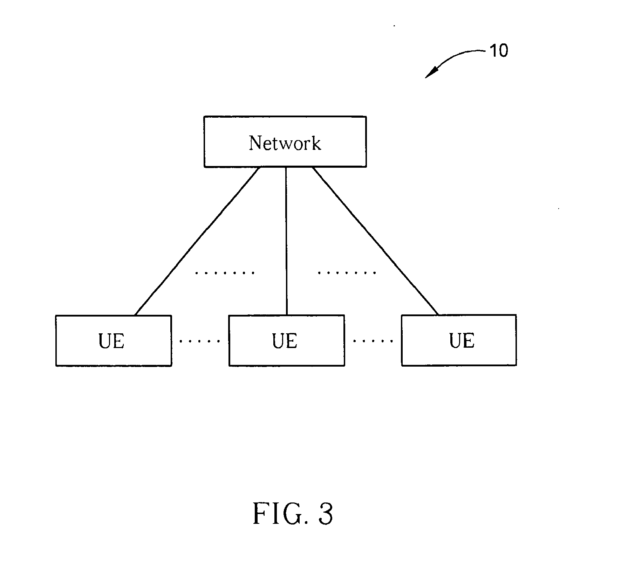

Please refer to Fig. 3, which illustrates a schematic diagram of a wireless communication system 10 according to an embodiment of the present invention. The wireless communication system 10 is an LTE (long-term evolution) system or other mobile communication systems, and is briefly composed of a network and a plurality of UEs. In Fig. 1, the network and the UEs are simply utilized for illustrating the structure of the wireless communication system 10. Practically, the network, a EUTRAN (evolved-UTAN), comprises a plurality of evolved base stations (eNBs). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

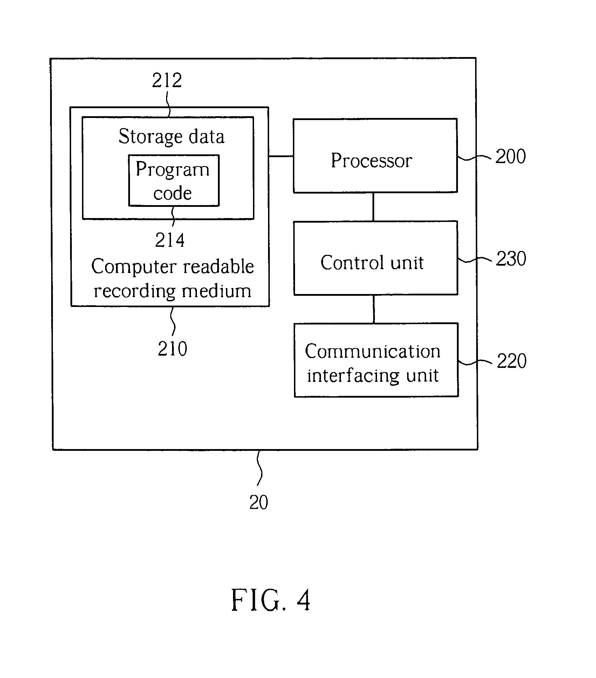

Please refer to Fig. 4, which illustrates a schematic diagram of a communication device 20 according to embodiments of the present invention. The communication device 20 can be the UE shown in Fig. 1 and includes a processor 200, a computer readable recording medium 210, a communication interfacing unit 220 and a control unit 230. The computer readable recording medium 210 is any data storage device that stores storage data 212, including program code 214, thereafter read and processed by the processor 200. Examples of the computer readable recording medium 210 include a subscriber identity module (SIM), read-only memory (ROM), random-access memory (RAM), CD-ROMs, magnetic tapes, floppy disks, optical data storage devices, and carrier waves (such as data transmission through the Internet). The control unit 230 controls the communication interfacing unit 220 and related operations and states of the communication device 20 according to processing results of the process 200. The communication interfacing unit 220 is preferably a radio transceiver for wirelessly communicating with the eNB.

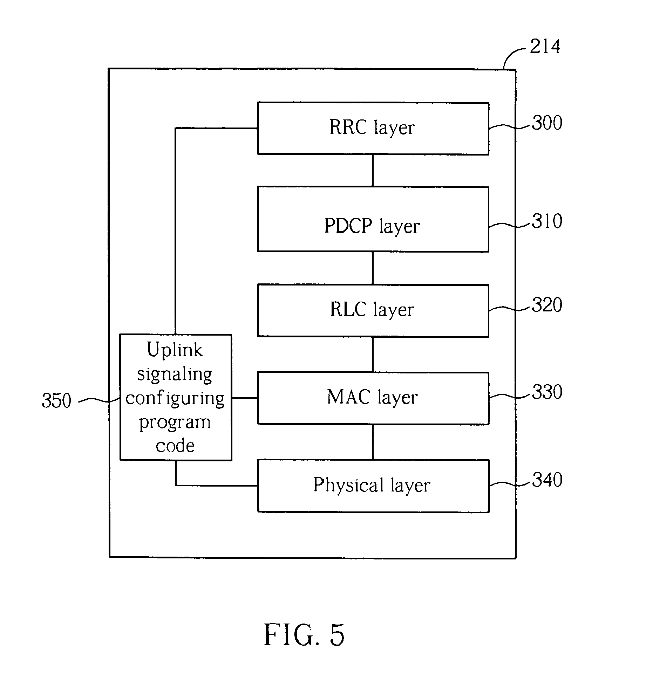

Please refer to Fig. 5, which illustrates a schematic diagram of the program code 214 according to embodiments of the present invention. The program code 214 includes program code of multiple communications protocol layers, which from top to bottom are a radio resource control (RRC) layer 300, a packet data convergence protocol (PDCP) layer 310, a radio link control (RLC) layer 320, a medium access control (MAC) layer 330 and a physical layer 340. The RRC layer 300 controls an RRC connection of the communication device 20 and thereby can switch the communication device 20 between an RRC_CONNECTED mode, indicating an on-going RRC connection, and an RRC_IDLE mode, indicating no RRC connection is established. The RLC layer 320 controls an RLC link with the eNB.

The MAC layer 330 is used for performing random access (RA) procedures for uplink (UL) synchronization, and HARQ (hybrid automatic repeat request) for data transmission and ACK/NACK (Acknowledgement/ Negative Acknowledgement) reporting. MAC PDUs including RLC PDUs (Protocol Data Units), i.e. MAC SDUs (Service Data Units), are generated for uplink, or the reverse process is performed for downlink. The RA procedures include a contention based RA procedure associated with a non-dedicated RA preamble and a non-contention based RA procedure associated with a dedicated RA preamble.

The physical layer 340 is configured for monitoring a PDCCH (Physical Downlink Control Channel) for network orders and a PUCCH (Physical Uplink Control Channel) for transmission of CQI (Channel Quality Indicator), ACK/NAK, and SR (Scheduling Request) in the control of the upper layers, e.g. the MAC layer 330. In addition, the physical layer 340 can contain an SRS (Sounding Reference Symbol) in the uplink SC-FDMA symbols for frequency domain channel-dependent scheduling.

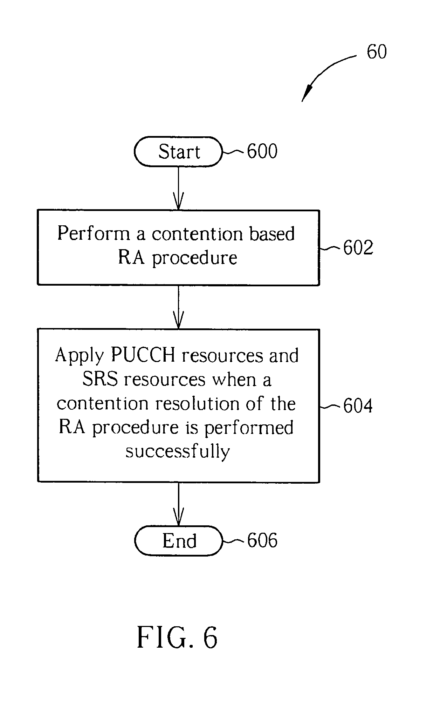

When the UE stays in the RRC_CONNECTED mode and has no UL synchronization with the eNB, the UE has no PUCCH resources applied. In this situation, the embodiment of the present invention provides uplink signaling configuring program code 350 in the program code 214 to improve UL transmission. Please refer to Fig. 6, which illustrates a flowchart of a process 60 according to an embodiment of the present invention. The process 60 is utilized for improving UL signaling corresponding to UL data transmission for a UE of a wireless communication system and can be compiled into the uplink signaling configuring program code 350. The process 60 includes the following steps:
Step 600: Start.
Step 602: Perform a contention based RA procedure.
Step 604: Apply PUCCH resources and SRS resources when a contention resolution of the RA procedure is performed successfully.
Step 606: End.

According to the process 60, the UE performs the RA procedure for retrieving uplink synchronization. When the UE performs the contention resolution successfully, the UE applies PUCCH resources forACK/NACK reporting, CQI reporting and SR transmission, and applies SRS resources for SRS transmission for eNB channel-dependent scheduling. The PUCCH and SRS resources are configured by RRC signaling. Through the process 60, the UE having no uplink synchronization with the network applies the abovementioned uplink resources to activate uplink ability before the up-coming possible uplink transmission is needed.

Please note that the contention based RA procedure can be triggered by DL data arrival or by UL data transmission.

The process 60 is also applied to a situation where the UE has UL data to transmit after releasing all PUCCH resources and any assigned SRS resources due to expiration of a time alignment timer. In this situation, the UE can re-apply PUCCH resources and SRS resources in time for the UL data transmission.

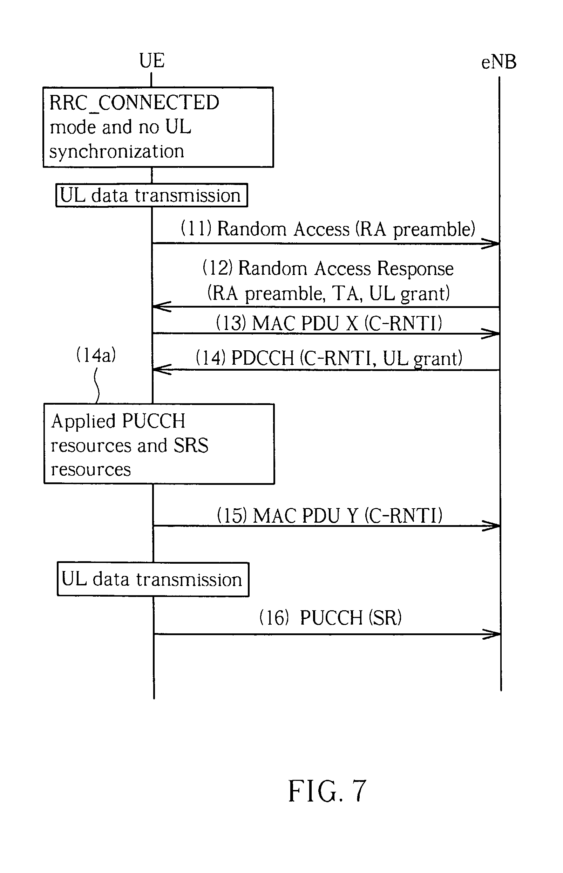

The process 60 can be used for improving the SR problem of prior art Fig. 1. Please refer to Fig. 7, which is a sequence diagram of a UE and an eNB corresponding to UL data transmission according to an embedment of the present invention. Steps (11), (12), (13), (14), and (15) of the Fig. 1 and Fig. 7 are the same and thus the detailed description thereof is omitted herein. In Fig. 7, Steps (14a) is added between Steps (14) and (15). In Step (14a), the UE applies PUCCH resources and SRS resources configured by RRC. In Step (16), the triggered SR is sent successfully via the configured PUCCH when another UL data transmission occurs after Step (15). Thus, the UE can use PUCCH for SR to enhance efficiency of the UL data transmission.

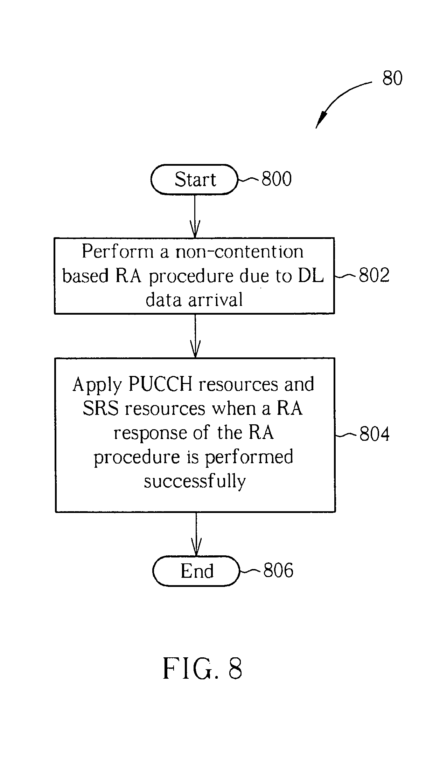

Please refer to Fig. 8, which illustrates a flowchart of a process 80 according to an embodiment of the present invention. The process 80 is utilized for improving UL signaling corresponding to DL data arrival for a UE of a wireless communication system and can be compiled into the uplink signaling configuring program code 350. The process 80 includes the following steps:
Step 800: Start.
Step 802: Perform a non-contention based RA procedure due to DL data arrival.
Step 804: Apply PUCCH resources and SRS resources when a RA response of the RA procedure is performed successfully.
Step 806: End.

According to the process 80, the UE performs the RA procedure due to the DL data arrival indicating that the eNB attempts to transmit DL data. When the UE receives the RA response successfully, the UE applies PUCCH resources for ACK/NACK reporting, CQI reporting and SR transmission, and further applies SRS resources for SRS transmission in eNB channel dependent scheduling. The PUCCH and SRS resources are configured by RRC signaling. Through the process 60, the UE having no uplink synchronization with the network applies the abovementioned uplink resources to activate uplink ability before the up-coming uplink transmission for ACK/NACK reporting related to received DL data is needed.

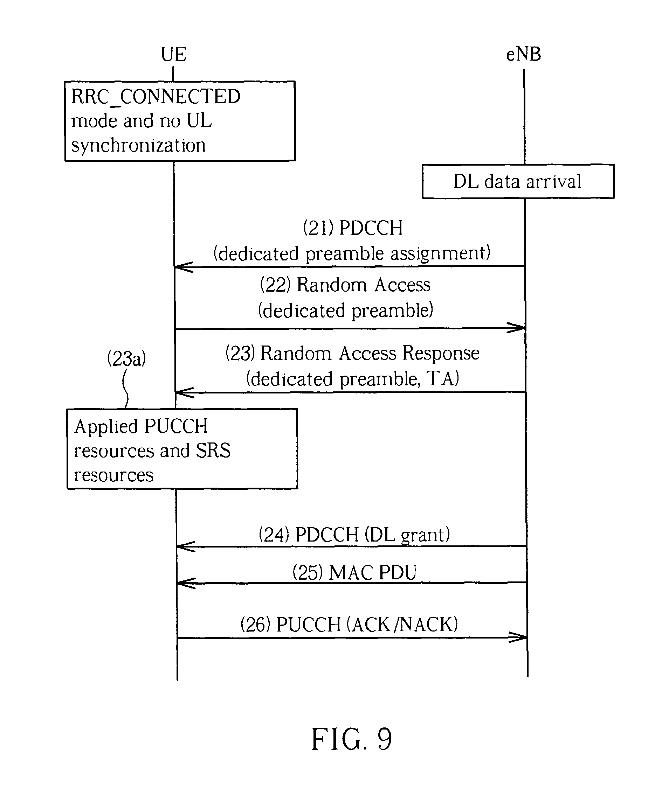

The process 80 can be used for improving the ACK/NACK reporting problem of prior art Fig. 2. Please refer to Fig. 9, which is a sequence diagram of a UE and an eNB corresponding to DL data arrival according to an embedment of the present invention. Steps (21), (22), (23), (24), and (25) of the Fig. 2 and Fig. 9 are the same and thus the detailed description thereof is omitted herein. In Fig. 9, Steps (23a) is added between Steps (23) and (24). In Step (23a), the UE applies PUCCH resources and SRS resources configured by RRC. After Step (23a) is performed, PUCCH is configured for the UE. In this situation, the UE is able to transmit ACK or NACK signaling related to the MAC PDU received in Step (25) through the PUCCH, as shown in Step (26).

Please note that the process 80 is also applied to a situation where the UE has DL data to receive after releasing all PUCCH resources and any assigned SRS resources due to expiration of a time alignment timer. The UE can re-apply PUCCH resources and SRS resources in time for the UL/DL data transmission.

In conclusion, the embodiments of the present invention enable the SR, ACK, and NACK transmission by timely applying PUCCH and report channel quality with SRS to improve uplink signaling transmission.

## Claims

1. A method of improving uplink signaling transmission for a user equipment of a wireless communication system (10), the method comprising:
performing a random access procedure (602); and
**characterized by**
applying resources of a physical uplink control channel and an uplink symbol used for channel quality determination when a message of the random access procedure received from a network of the wireless communication system (10) is performed successfully (604).

2. A communication device (20) of a wireless communication system (10) for improving uplink signaling transmission, the communication device (20) comprising:
a computer readable recording medium (210) for storing the storage data comprising program code (214) corresponding to a process; and
a processor (200) coupled to the computer readable recording medium (210), for processing storage data to execute the process;
wherein the process comprises:
performing a random access procedure (602); and
**characterized by**
applying resources of a physical uplink control channel and an uplink symbol used for channel quality determination when a message of the random access procedure received from a network of the wireless communication system (10) is performed successfully (604).

3. The method of claim 1 or the communication device (20) of claim 2, **characterized in that** the random access procedure is a contention based random access procedure corresponding to uplink data transmission or downlink data arrival.

4. The method or the communication device (20) of claim 3, **characterized in that** the message of the random access procedure received from the network of the wireless communication system (10) is a contention resolution message of the random access procedure.

5. The method of claim 1 or the communication device (20) of claim 2, **characterized in that** the random access procedure is a non-contention based random access procedure corresponding to downlink data arrival.

6. The method or the communication device (20) of claim 5, **characterized in that** the message of the random access procedure received from the network of the wireless communication system (10) is a random access response of the random access procedure.

7. The method of claim 1 or the communication device (20) of claim 2, **characterized in that** the uplink symbol used for channel quality determination is a sounding reference symbol.

8. The method of claim 1 the communication device (20) of claim 2, **characterized in that** the resources of the physical uplink control channel and the uplink symbol used for channel quality determination are configured by radio resource control signaling.
